# EUROPEAN PATENT SPECIFICATION

(11) **EP 0 452 129 B1**
(45) Date of publication and mention of the grant of the patent: **11.01.1995**
(21) Application number: 91303214.0
(22) Date of filing: 11.04.1991
(51) Int. Cl.: B62D 29/04

(54) **Joint structure for sandwiched structural body**
Verbindungsanordnung für Körper mit Sandwich-Struktur
Structure de joint pour corps à structure sandwich

(30) Priority: 11.04.1990 JP 38868/90; 23.04.1990 JP 43255/90
(43) Date of publication of application: 16.10.1991
(73) Proprietor: HONDA GIKEN KOGYO KABUSHIKI KAISHA, Minato-ku Tokyo 107 (JP)
(72) Inventor: Yoshida, Suguru, c/o Honda R & D Co., Ltd., Wako-shi, Saitama (JP); Tsunoda, Isao, c/o Honda R & D Co., Ltd., Wako-shi, Saitama (JP); Sano, Shoichi, c/o Honda R & D Co., Ltd., Wako-shi, Saitama (JP)
(74) Representative: Leale, Robin George

(56) References cited:
- EP-A- 0 372 987
- US-A- 4 559 274

## Description

The present invention relates to a joint structure for a sandwiched structural body comprising a core layer whose opposite surfaces are covered with outer skin layers, and more particularly to a joint structure for joining another structural body to such a sandwiched structural body, e.g. in as a motor vehicle body.

Composite structural bodies mainly made of synthetic resin or reinforced plastic have recently been proposed and used as motor vehicle bodies for the purposes of reducing the weight of motor vehicles and also reducing the number of motor vehicle components for greater productivity of motor vehicles.

Such composite structural bodies are generally in the form of a sandwiched structure body comprising a core layer whose opposite surfaces are covered with outer skin layers. The core layer may be made of foamed plastic (see, for example, Japanese Patent Publications Nos. 46-36329 and 55-43912, Japanese Laid-Open Utility Model Publication No. 63-30276, U.S. Patents Nos. 4,559,274 and 4,573,707), or of a honeycomb structure (see, for example, Japanese Laid-Open Patent Publication No. 47-32521, Japanese Laid-Open Utility Model Publications Nos. 57-114774, 62-174935, and 62-174978). It has also been proposed to use, as a motor vehicle body, a sandwiched structural body with a hollow space in a core layer, as disclosed in Japanese Laid-Open Utility Model Publication No. 62-166136, for example.

Modern motor vehicles such as automobiles mostly have a monocoque body that combines a frame and a body together and which can bodily bear external forces applied thereto. Since the applied external forces are distributed over the entire monocoque body, it can withstand strong stresses. The monocoque body is advantageous in that the entire motor vehicle weight is reduced, and the motor vehicles can be produced at an increased production rate and with less cost. Therefore, it is preferable that motor vehicle bodies in the form of composite structural bodies of reinforced plastic or the like be also of a monocoque structure for reduced motor vehicle weight and increased productivity. Demands for composite structural bodies as monocoque motor vehicle bodies are growing.

However, there are known certain problems in connection with sandwiched composite structural bodies of synthetic resin or reinforced plastic. Specifically, a component joined to a core layer by screws or other fasteners may not be fastened strongly enough and may work loose. Sufficient bonding strength cannot be achieved either when a component is welded or bonded to an outer skin layer. Components in the form of sandwiched structural bodies cannot easily be joined by fasteners to each other because of the core layer between the outer skin layers of each sandwiched structural body. When the outer skin layers of such components are bonded together by an adhesive, no sufficient bonding strength is available between the components. If a monocoque motor vehicle body were assembled from a plurality of components in the form of sandwiched composite structural bodies, as with conventional steel sheets or the like, then the assembled monocoque body would not be sufficiently mechanically strong, durable, and shock-resistant. Such an approach would not be effective to increase productivity as the number of components would not be reduced.

There is disclosed in "Product Engineering" of April 1973 a motor vehicle body comprising the features of the preamble of claim 1 including a sandwich structure comprising a foam core enclosed in an outer shell made of plastics sheets which are bonded to each other in highly stressed areas such as where another components is connected.

According to the present invention, there is provided a joint structure comprising:
a sandwiched structural body comprising a core layer having opposite surfaces and a pair of first and second outer skin layers covering said opposite surfaces, respectively;
a substantially concave joint region defined in said first outer skin layer and comprising a side wall and a bottom wall contiguous to said side wall, said bottom wall being joined to said second outer skin layer; characterized in that
said joint region of said sandwiched structural body serving as a flange on an edge of said sandwiched structural body;
a second structural body comprising a pair of first and second outer skin layers, said second structural body being joined to said sandwiched structural body;
said first and second outer skin layers of said second structural body being joined into mated regions serving as first and second flanges on edges of said second structural body;
said first outer skin layer in said first flange of said second structural body being joined to said second outer layer in said flange of said sandwiched structural body, and said first outer skin layer in said second flange of said second structural body being joined to said second outer layer of said sandwiched structural body in an area other than said joint region of said sandwiched structural body.

Some embodiments of the invention will now be described by way of example and with reference to the accompanying drawings, in which:-
FIG. 1 is an exploded perspective view of a motor vehicle body into which a joint structure according to the present invention can be incorporated;
FIG. 2 is an enlarged perspective view of a side panel of the motor vehicle body shown in FIG. 1; and
FIG. 3 is a fragmentary cross-sectional view of a joint structure according to the present invention, the joint structure being capable of joining a floor panel of the motor vehicle body shown in FIG. 1 and the side panel shown in FIG. 2 to each other.

Like or corresponding parts are denoted by like or corresponding reference numerals throughout views.

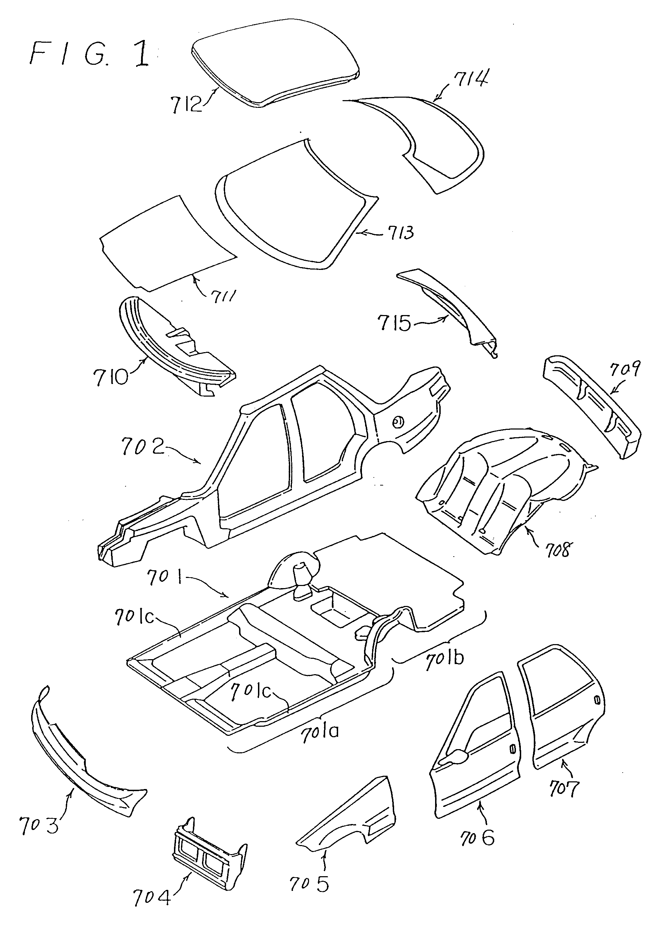

FIG. 1 shows, in exploded perspective, a motor vehicle body which is made up of a floor panel 701, a pair of lefthand and righthand side panels 702 (only lefthand side panel shown), a front bumper 703, a pair of lefthand and righthand firewalls or bulkheads 704 (only lefthand bulkhead shown), a pair of lefthand and righthand fenders (only lefthand fender shown), front and rear pairs of doors 706, 707 (only lefthand front and rear doors shown), a rear firewall or bulkhead 708, a rear bumper 709, a dashboard 710, a hood 711, a roof 712, a windshield 713, a rear window 714, and a trunk lid panel 715.

The various motor vehicle body components described above are each of a sandwiched structural body comprising a core layer whose opposite surfaces are covered with respective outer skin layers. As described later on, some of the components may be of a hollow structure.

The floor panel 701 comprises a front floor pan 701a and a rear floor pan 701b which are integrally formed together. The floor panel 701 includes a core layer covered with a pair of upper and lower outer skin layers which are joined into a flange extending fully around the peripheral edge of the floor panel 701. The front floor pan 701a has raised walls 701c along its laterally spaced opposite edges.

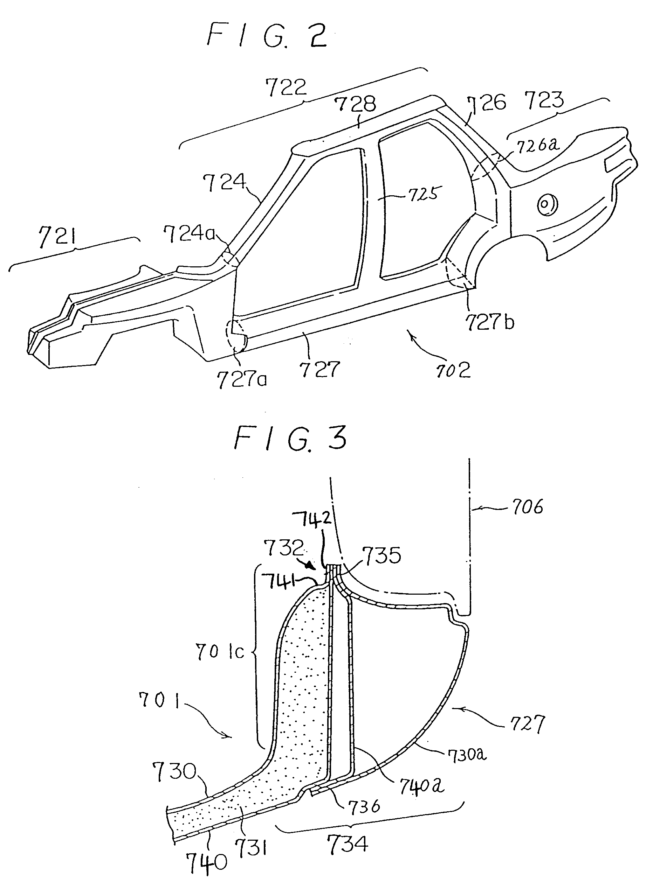

As shown at enlarged scale in FIG. 2, the side panel 702 is of a unitary structure comprising a front frame 721, a side member 722, and a quarter panel 723. The side member 722 has a front pillar 724, a center pillar 725, a rear pillar 726, a body rocker panel 727, and a side roof rail 728.

Each of the front frame 721 and the quarter panel 723 is of a sandwiched structure including a core layer with its opposite surfaces covered with respective outer skin layers. The side member, 722 is however of a hollow structure including a pair of spaced outer skin layers which jointly constitute a tubular member. As shown in FIG. 2, the side member 722 includes a plurality of spaced partitions 724a, 726a, 727a, 727b which isolate the core layers of the front frame 721 and the quarter panel 723.

The motor vehicle body includes a basic frame assembly made up of the floor panel 701 and the side panels 702. The raised walls 701c of the floor panel 701 and the body rocker panels 727 of the side panels 702 are joined by a a joint structure according to the invention, as shown in detail in FIG. 3.

The floor panel 701 is in the form of a sandwiched structural body comprising a core layer 731 covered with a pair of upper and lower outer skin layers 730, 740. The outer skin layers 730, 740 are joined to each other above each of the raised walls 701c, at a substantially concave joint region defined in the first outer skin layer 730 and comprising a side wall 741 and a bottom wall 742 contiguous to such side wall, thus providing a flange 732 which extends upwardly. FIG. 3 shows the lefthand raised wall 701c and the flange 732 disposed upwardly thereof.

The body rocker panel 727 of the lefthand side panel 702 is joined to an outer surface of the raised wall 701c. As described above, the body rocker panel 727 is of a hollow shape with the outer skin layers 730a, 740a joined at its opposite ends into a tubular member with opposite flanges 735, 736. The flange 735 is positioned on an upper portion of the body rocker panel 727. The flange 735 is oriented in the same direction as, and joined to, the flange 732 of the floor panel 701. The other flange 736 is positioned on a lower portion of the body rocker panel 727, and extends inwardly with respect to the motor vehicle body into mating engagement with the lower outer skin layer 740 of the floor panel 701. Therefore, the outer skin layers 730a, 740a are joined together in different directions in the flanges 735, 736 of the body rocker panel 727. Specifically, the outer skin layers 730a, 740a are joined substantially vertically in the flange 735, whereas they are joined substantially horizontally in the flange 736. The raised wall 701c and the body rocker panel 727 which are thus joined to each other jointly serve as a side sill 734.

The outer side of the raised wall 701c of the floor panel 701 and the inner side of the body rocker panel 727 are held out of contact with each other, except for the joined flanges 735, 736, with a gap created therebetween.

Since the basic frame assembly of the motor vehicle body is thus constructed of the floor panel 701 and the side panels 702 which are joined together, the motor vehicle body is highly mechanically strong, durable, and resistant to shocks or impacts. Each of the floor panel 701 and the side panels 702 is unitary in structure. Consequently, any external load imposed on the basic frame assembly does not concentrate on a local area, but is borne by the large mass of the entire basic frame assembly, resulting in high mechanical strength and shock resistance. Particularly, the side panels 702 are rigid against longitudinal external forces because they do not have regions susceptible to stresses, such as welded, bonded, or otherwise joined regions, and loads applied from the front ends of the side panels 702 are transmitted through the front frames 721 to the front pillars 724 and the body rocker panels 727. Likewise, loads applied from the rear ends of the side panels 702 are transmitted through the quarter panels 723 to the rear pillars 726 and the body rocker panels 727. Thus, these loads are borne by the entire side panels 702.

The motor vehicle body which incorporates joint structures of the present invention is highly resistant to bending and torsional forces applied thereto. More specifically, as shown in FIG. 3, the outer skin layers 730a, 740a of the body rocker panel 727 are joined together in widely different directions in the flanges 735, 736. Therefore, bending or torsional forces are not applied in the directions to tear the outer skin layers 730a, 740a apart in both the flanges 735, 736. For example, when the body rocker panel 727 is subjected to a force tending to pull a portion of the body rocker panel 727 to the right (FIG. 3) due to an external bending force or the like, the shear strength of the bonded outer skin layers 730a, 740a of the flange 736 is strong enough to prevent the body rocker panel 727 from being broken apart.

Furthermore, the gap between the outer side of the raised wall 701c of the floor panel 701 and the inner side of the body rocker panel 727 can absorb excessive bending forces or the like which are applied to the side sill 734. The body rocker panel 727 positioned outwardly of the raised wall 701c is effective to avoid an undue increase in the height of the side sill 734, so that passengers can easily get into and out of the motor vehicle.

The hollow shape of the side panels 702 may be varied depending on the shape of the motor vehicle. The side panels 702 may be filled in their entirety with core layers if the mechanical strength of the motor vehicle body is more important than a reduction in the weight of the motor vehicle body. Rather than the side panels 702, the rear floor pan 701b of the floor panel 701 may be of a hollow structure, or may have only one outer skin layer. Each of the doors 706, 707 may be of a hollow structure without any core layer, or may be a sandwiched structural body having a core layer. Moreover, each of the front pillar 724, the side pillar 725, the rear pillar 726, and the side roof rail 728 may have two flanges made up of joined outer skin layers, as with the flanges 735, 736 of the body rocker panel 727, and those flanges may extend in different directions thereby to increase the mechanical strength of the motor vehicle body against bending or torsional forces applied thereto.

In the embodiment, the outer skin layers may be made of any of various plastic materials, but should preferably be made of fiber-reinforced plastic The matrix material of such fiber-reinforced plastic should preferably be thermoplastic resin. More preferably, the matrix material should be carbon-fiber-reinforced nylon in view of its good formability, mechanical strength, and durability. The core layer may be made of foamed plastic, or in the form of a honeycomb core, or have a hollow space therein, but should preferably be made of foamed plastic, particularly, polyurethane foam, in view of its good formability and high mechanical strength. If the joint structure is used in applications where less stress concentration is expected and no strength problem appears to happen, then the core layer may be of a hollow structure.

It will thus be seen that the embodiments of the present invention provides a joint structure for joining any of various components to a sandwiched structural body, such as a composite structural body, comprising a core layer and outer skin layers, or joining sandwiched structural bodies of such a construction to each other, with sufficient mechanical strength and furthermore provides a joint structure for joining or coupling sandwiched structural bodies, such as composite structural bodies, for use as a motor vehicle body of reduced weight, with increased mechanical strength, durability, and shock resistance.

Although there have been described what are at present considered to be a preferred embodiment of the present invention, it will be understood that the invention may be embodied in other specific forms without departing from the essential characteristics thereof. The present embodiments are therefore to be considered in all aspects as illustrative, and not restrictive.

## Claims

1. A joint structure comprising:
a sandwiched structural body (701c) comprising a core layer (731) having opposite surfaces and a pair of first and second outer skin layers (730, 740) covering said opposite surfaces, respectively;
a substantially concave joint region (732) defined in said first outer skin layer (730) and comprising a side wall (741) and a bottom wall (742) contiguous to said side wall, said bottom wall being joined to said second outer skin layer (740); characterized in that
said joint region (732) of said sandwiched structural body serving as a flange on an edge of said sandwiched structural body;
a second structural body (727) comprising a pair of first and second outer skin layers (740a, 730a), said second structural body being joined to said sandwiched structural body;
said first and second outer skin layers of said second structural body being joined into mated regions serving as first and second flanges (735, 736) on edges of said second structural body;
said first outer skin layer (740a) in said first flange (735) of said second structural body being joined to said second outer layer (740) in said flange of said sandwiched structural body, and said first outer skin layer (740a) in said second flange (736) of said second structural body being joined to said second outer layer (740) of said sandwiched structural body in an area other than said joint region (732) of said sandwiched structural body.

2. A joint structure according to claim 1, wherein said sandwiched structural body (701c) and second structural body (727) comprise a portion of a floor panel (701) and a portion of a side panel (702), respectively, of a basic frame assembly of a motor vehicle body.

3. A joint structure according to claim 2, wherein said portion (701c) of the floor panel (701) comprises a raised wall on each of laterally spaced sides of the floor panel, said side panel (702) including a front frame (721) and a side member (722) which are integrally coupled with each other, said portion (727) of the side panel comprising a body rocker panel of said side member.

4. A joint structure according to claim 3, wherein said flange (732) and second outer skin layer (740) of the raised wall (701c) and said first and second flanges (735, 736) of said body rocker panel (727) are joined to each other, whereby said raised wall and said body rocker panel jointly constitute a side sill of the motor vehicle body.

5. A joint structure according to claim 4, wherein said flange (732) of the raised wall (701c) extends upwardly with respect to the motor vehicle body, said first flange (735) of said body rocker panel (727) extending upwardly and being joined to said flange of the raised wall, said second flange (736) extending inwardly with respect to the motor vehicle body and being joined to said second outer skin layer (740) of the raised wall in said area.

6. A joint structure according to any of claims 3 to 5, wherein said body rocker panel (727) is of a hollow structure without a core layer therein.

7. A joint structure according to any of claims 3 to 5, wherein said body rocker panel (727) is of a sandwich structure comprising a core layer between said outer skin layers (740a, 730a).

8. A joint structure according to any of claims 3 to 7, wherein said second outer skin layer (740) in said raised wall (701c) and said first outer skin layer (740a) in said body rocker panel (727) are spaced from each other, providing a gap therebetween in an area other than said first and second flanges (735, 736) joined to said raised wall.

## Patentansprüche

1. Verbindungsstruktur, umfassend;
einen Sandwichstrukturkörper (701c), der eine Kernschicht (731) mit gegenüberliegenden Oberflächen und ein Paar die gegenüberliegenden Oberflächen jeweils bedeckender erster und zweiter Außenhautschichten (730, 740) aufweist;
einen im wesentlichen konkaven Verbindungsbereich (732), der in der ersten Außenhautschicht (730) gebildet ist und eine Seitenwand (741) und eine sich an die Seitenwand anschließende Bodenwand (742) aufweist, wobei die Bodenwand mit der zweiten Außenhautschicht (740) verbunden ist,
**dadurch gekennzeichnet,**
daß:
der Verbindungsbereich (732) des Sandwichstrukturkörpers als ein Flansch an einem Rand des Sandwichstrukturkörpers dient;
ein zweiter Strukturkörper (727) ein Paar erster und zweiter Außenhautschichten (740a, 730a) aufweist, wobei der zweite Strukturkörper mit dem Sandwichstrukturkörper verbunden ist;
die ersten und zweiten Außenhautschichten des zweiten Strukturkörpers in als erste und zweite Flansche (735, 736) an Rändern des zweiten Strukturkörpers dienenden Paßbereichen miteinander verbunden sind;
die erste Außenhautschicht (740a) in dem ersten Flansch (735) des zweiten Strukturkörpers mit der zweiten Außenschicht (740) in dem Flansch des Sandwichstrukturkörpers verbunden ist und die erste Außenhautschicht (740a) in dem zweiten Flansch (736) des zweiten Strukturkörpers mit der zweiten Außenschicht (740) des Sandwichstrukturkörpers in einem Bereich verbunden ist, der sich von dem Verbindungsbereich (732) des Sandwichstrukturkörpers unterscheidet.

2. Verbindungsstruktur nach Anspruch 1, in der der Sandwichstrukturkörper (701c) und der zweite Strukturkörper (727) einen Abschnitt einer Bodenplatte (701) bzw. einen Abschnitt einer Seitenplatte (702) einer Basisrahmenanordnung einer Kraftfahrzeugkarosserie aufweisen.

3. Verbindungsstruktur nach Anspruch 2, in der der Abschnitt (701c) der Bodenplatte (701) an jeder seitlich beabstandeter Seiten der Bodenplatte eine hochstehende Wand aufweist, wobei die Seitenplatte (702) einen Frontrahmen (721) und ein Seitenteil (722) umfaßt, die integral miteinander gekoppelt sind, wobei der Abschnitt (727) der Seitenplatte eine Karosserietürschwellenplatte des Seitenteils aufweist.

4. Verbindungsstruktur nach Anspruch 3, in der der Flansch (732) der zweiten Außenhautschicht (740) der hochstehenden Wand (701c) und die ersten und zweiten Flansche (735, 736) der Karosserietürschwellenplatte (727) miteinander verbunden sind, wodurch die hochstehende Wand und die Karosserietürschwellenplatte gemeinsam eine Seitenwand der Kraftfahrzeugkarosserie bilden.

5. Verbindungsstruktur nach Anspruch 4, in der der Flansch (732) der hochstehenden Wand (701c) bezüglich der Kraftfahrzeugkarosserie nach oben absteht, wobei der erste Flansch (735) der Karosserietürschwellenplatte (727) nach oben absteht und mit dem Flansch der hochstehenden Wand verbunden ist, wobei der zweite Flansch (736) bezüglich der Kraftfahrzeugkarosserie nach innen absteht und in diesem Bereich mit der zweiten Außenhautschicht (740) der hochstehenden Wand verbunden ist.

6. Verbindungsstruktur nach einem der Ansprüche 3 bis 5, in der die Karosserietürschwellenplatte (727) eine Hohlstruktur ohne Kernschicht darin ist.

7. Verbindungsstruktur nach einem der Ansprüche 3 bis 5, in der die Karosserietürschwellenplatte (727) eine Sandwichstruktur hat, die zwischen den Außenhautschichten (740a, 730a) eine Kernschicht aufweist.

8. Verbindungsstruktur nach einem der Ansprüche 3 bis 7, in der die zweite Außenhautschicht (740) in der hochstehenden Wand (701c) und die erste Außenhautschicht (740a) in der Karosserietürschwellenplatte (727) voneinander beabstandet sind, zwischen denen ein Spalt in einem Bereich vorgesehen ist, der sich von dem mit der hochstehenden Wand verbundenen ersten und zweiten Flanschen (735, 736) unterscheidet.

## Revendications

1. Structure de liaison comprenant :
un corps structurel (701c) pris en sandwich, comprenant une couche de noyau (731) munie de surfaces opposées, et une paire de première et seconde couches (730, 740) de chemisage extérieur recouvrant, respectivement, lesdites surfaces opposées ;
une zone de solidarisation (732) sensiblement concave, définie dans ladite première couche (730) de chemisage extérieur, et comprenant une paroi latérale (741) et une paroi de fond (742) contiguë à ladite paroi latérale, ladite paroi de fond étant reliée à ladite seconde couche (740) de chemisage extérieur ; caractérisée par le fait que
ladite zone de solidarisation (732) dudit corps structurel pris en sandwich remplit la fonction d'une aile sur un bord dudit corps structurel pris en sandwich ;
un second corps structurel (727) comprend une paire de première et seconde couches (740a, 730a) de chemisage extérieur, ledit second corps structurel étant relié audit corps structurel pris en sandwich ;
lesdites première et seconde couches de chemisage extérieur dudit second corps structurel sont solidarisées en des zones complémentaires, remplissant la fonction de première et seconde ailes (735, 736) sur des bords dudit second corps structurel ;
ladite première couche (740a) de chemisage extérieur, située dans ladite première aile (735) dudit second corps structurel, est reliée à ladite seconde couche extérieure (740) dans ladite aile dudit corps structurel pris en sandwich, et ladite première couche (740a) de chemisage extérieur, située dans ladite seconde aile (736) dudit second corps structurel, est reliée à ladite seconde couche extérieure (740) dudit corps structurel pris en sandwich, dans une région autre que ladite zone de solidarisation (732) dudit corps structurel pris en sandwich.

2. Structure de liaison selon la revendication 1, dans laquelle ledit corps structurel (701c) pris en sandwich et ledit second corps structurel (727) comprennent, respectivement, une partie d'un panneau de plancher (701) et une partie d'un panneau latéral (702) du bloc châssis de base de la carcasse d'un véhicule à moteur.

3. Structure de liaison selon la revendication 2, dans laquelle ladite partie (701c) du panneau de plancher (701) comprend une paroi rehaussée sur chacun de côtés latéralement espacés du panneau de plancher, ledit panneau latéral (702) comportant un cadre frontal (721) et un élément latéral (722) mutuellement accouplés d'un seul tenant, ladite partie (727) du panneau latéral comprenant un panneau de bas de caisse dudit élément latéral.

4. Structure de liaison selon la revendication 3, dans laquelle lesdites aile (732) et seconde couche (740) de chemisage extérieur de la paroi rehaussée (701c), et lesdites première et seconde ailes (735, 736) dudit panneau (727) de bas de caisse, sont reliées les unes aux autres, ladite paroi rehaussée et ledit panneau de bas de caisse matérialisant, conjointement, un marchepied de la carcasse du véhicule à moteur.

5. Structure de liaison selon la revendication 4, dans laquelle ladite aile (732) de la paroi rehaussée (701c) s'étend vers le haut par rapport à la carcasse du véhicule à moteur, ladite première aile (735) dudit panneau (727) de bas de caisse s'étendant vers le haut et étant reliée à ladite aile de la paroi rehaussée, ladite seconde aile (736) s'étendant vers l'intérieur par rapport à la carcasse du véhicule à moteur et étant reliée, dans ladite région, à ladite seconde couche (740) de chemisage extérieur de la paroi rehaussée.

6. Structure de liaison selon l'une quelconque des revendications 3 à 5, dans laquelle ledit panneau (727) de bas de caisse est de structure creuse, ne renfermant aucune couche de noyau.

7. Structure de liaison selon l'une quelconque des revendications 3 à 5, dans laquelle ledit panneau (727) de bas de caisse est de structure sandwich, comprenant une couche de noyau entre lesdites couches (740a, 730a) de chemisage extérieur.

8. Structure de liaison selon l'une quelconque des revendications 3 à 7, dans laquelle ladite seconde couche (740) de chemisage extérieur située dans ladite paroi rehaussée (701c), et ladite première couche (740a) de chemisage extérieur située dans ledit panneau (727) de bas de caisse, sont espacées l'une de l'autre en réservant, entre elles, un interstice dans une région autre que lesdites première et seconde ailes (735, 736) reliées à ladite paroi rehaussée.
